Europäisches Patentamt

European Patent Office

Office européen des brevets

(11) Publication number: **0 253 062 B1**

## EUROPEAN PATENT SPECIFICATION

(45) Date of publication of patent specification: **27.05.92**  (51) Int. Cl.$^5$: **H04B 3/48**

(21) Application number: **87104272.7**

(22) Date of filing: **24.03.87**

(54) **A method for measuring the overall loss in four-wire phone circuits, and apparatus for carrying it out.**

(30) Priority: **18.07.86 IT 2116986**

(43) Date of publication of application:
**20.01.88 Bulletin  88/03**

(45) Publication of the grant of the patent:
**27.05.92 Bulletin  92/22**

(84) Designated Contracting States:
**DE FR GB**

(56) References cited:

**PATENT ABSTRACTS OF JAPAN, vol. 8, no. 272 (E-284)[1709], 13th December 1984; & JP-A-59 143 433**

**SIEMENS REVIEW, vol. 44, no. 11, November 1977, pages 491-494, Erlangen, DE; W. SPINDLER: "Swept-frequency tast set 12kHz to 18.6 MHz for equalizing carrier transmission routes"**

**PATENT ABSTRACTS OF JAPAN, vol. 9, no. 136 (E-320)[1859], 12th June 1985; & JP-A-60 20 656**

(73) Proprietor: **RAI RADIOTELEVISIONE ITALIANA
Corso Giambone, 68
I-10135 Torino(IT)**

(72) Inventor: **Volta, Giovanni
Via E.D. Arborea 9/7
Torino(IT)**

(74) Representative: **Forattini, Amelia et al
c/o Internazionale Brevetti Ingg. ZINI,
MARANESI & C. S.r.l. Piazza Castello 1
I-20121 Milano(IT)**

## Description

This invention is concerned with a method for measuring the overall loss both in the direct and in the return circuit of a four-wire communication circuit, particularly a four-wire phonic circuit. The invention also relates to apparatus for carrying out the method.

For a detailed explanation of the concept of overall loss, see G. Foddis, "Corso Teorico-pratico di Telefonia", Ed. Ulrico Hoepli, Milano, 1956.

It is known that with current methods of measuring the overall loss in a circuit, at least two operators are required, each at one end of the circuit: one operator sends test signals from one end, the other operator receives the signals at the other end, measures them and transmits the results of the measure back to the first operator.

If the circuit under test is a four-wire circuit, the above operation, performed on the direct circuit, is followed by a second similar operation on the return circuit, the roles of the operators being exchanged.

In the specification and in the claims, the expressions "direct circuit" and "return circuit" refer to a unidirectional circuit (in the general case), comprising e.g. a pair of telephone conductors, a telephone or a musical channel in a MPLX system, etc. Such type of communication circuit is also designated in the following as "pair of conductors", it being understood, however, that the pair of conductors may include, in general, also intermediate amplifying stages, modems, multiplexers, etc., as known in telephone lines.

The above measuring method requires the work of two operators, placed at a distance from each other, and a twofold transmission of readings from one operator to the other one.

Other known systems for monitoring transmission lines are, for example, disclosed in the Siemens Review, vol. 44, No. 11, November 1977, pages 491-494, by W. Spindler, and in the Japanese Patent No. 59-143-433, Nippon Denki K.K.

Spindler discloses a swept-frequency test set for equalizing carrier routes; Nippon Denki K.K. discloses a method for monitoring a transmission line from a station A and a station B, and vice versa, by operating a switch.

Japanese Patent No. 60-20656 FUJITSU K.K. discloses a method according to the preamble of Claim 1.

It is the object of this invention to provide a method and an apparatus for effecting a measure of the overall loss both in the direct circuit and in the return circuit in four-wire circuits, by operating from one end only, or near end, of the four-wire circuit, and by using only one operator, and without requiring any reading or transmission of measure data from the opposite, or remote, end of the line.

The invention achieves the above object by a method for measuring the overall loss in a four-wire circuit as claimed in claim 1, and by an apparatus, for carrying out the method of claim 1, as claimed in claim 3.

The above mentioned object, together with other objects and advantages of the invention, will appear from the following detailed disclosure of a preferred embodiment of the invention, shown in the attached drawings, wherein:

Fig. 1 is a schematic illustration of a four-wire circuit connecting two stations A and B;

Fig. 2 is a schematic illustration of the circuit of Fig. 1, with a measuring apparatus for carrying out the method of the invention;

Fig. 3 is a diagram showing, by way of example, the operating response of a compandor used in the method of the invention.

The expression "logarithmic level", or simply "level" of a phonic signal will be used in the following disclosure with reference to a measure of the magnitude or power of such a signal in logarithmic units, such as decibels, nepers, and the like. All measures of signals and their attenuations shall be construed as obtained in such logarithmic units.

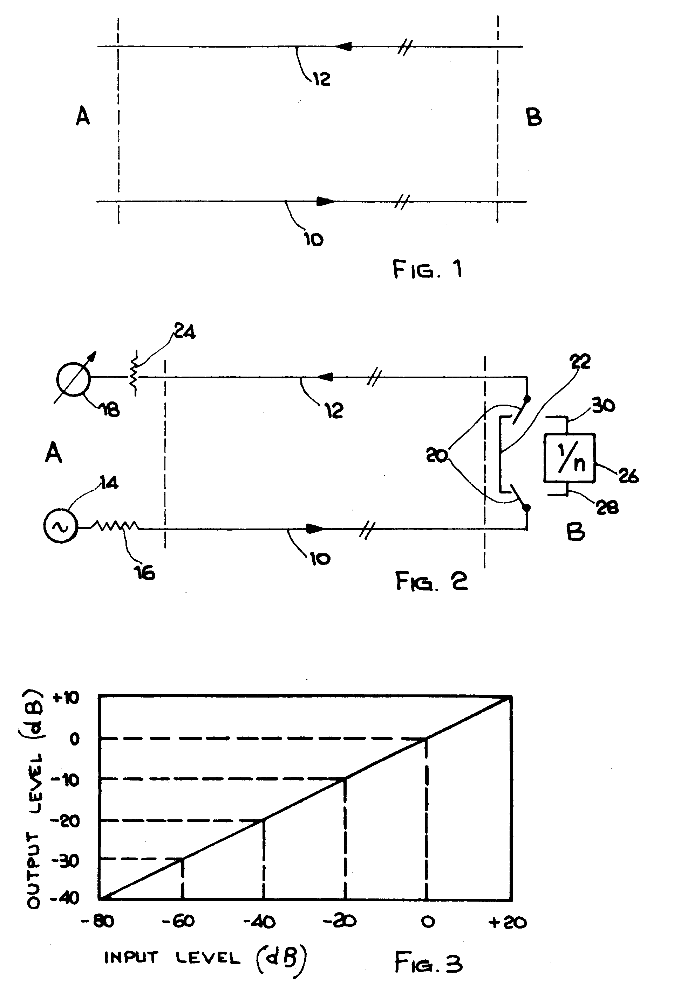

Fig. 1 shows a four-wire circuit connecting stations A and B. In the diagram, 10 is a first pair of leads, of which it is desired to measure the overall loss X (in dB) in the direction from A to B, and 12 is a second pair of leads, of which it is desired to measure the overall loss Y (in dB) from B to A.

Fig. 2 shows the same circuit of Fig. 1, with the addition of the measuring equipment necessary for making the measure according to the invention. This comprises: a generator 14 of test phonic signals, connected to the first end, or end A, of the first pair of leads 10, and having an internal impedance referenced with 16; a measuring instrument 18, adapted to give a reading of the logarithmic level of the signal, and connected to the first end, or end A, of the second pair of conductors 12; a two-way, double-throw switch 20; and a two-wire short-circuit connection 22, arranged for directly connecting end B of the pair of leads 10 with end B of the pair of leads 12 in a first position of switch 20, as shown in Fig. 2. End A of the pair of leads 12 is terminated on a predetermined load 24, generally having a value of 600 ohms, according to standard specifications, as well known in the art.

The measuring apparatus further includes a compandor 26 having an input 28 and an output 30, connected to respective terminals of switch 20, and adapted to divide the logarithmic level (e.g. in dB) of an ingoing signal by a desired division factor n. This action is also known as compression. When switch 20 is in its second position (not shown in the Figures), input 28 of compandor 26 is connected to end B of the pair of conductors 10, while output 30 is connected to end B of the pair of conductors 12.

A compandor useful for application in the method of the invention is, e.g., the integrated circuit NE 570 manufactured by Signetics, which provides a compression ratio of 2 in the dynamics of the applied signal. Fig. 3 shows, by way of example, the operating characteristic of such integrated circuit. The level in dB of the ingoing signal is given in the abscissa, while the level of the outgoing signal is given in the ordinate. It can be seen that the device 26 carries out a division of the decibels of the ingoing signal by a constant division factor. However, within the field of use of the invention, such division factor could be less than one, e.g. 0.1, and the compression could then actually be an expansion.

Preferably, switch 20 can be controlled from station A, via the pair of conductors 10. Since the apparatus (modems) used in data transmission usually provide for short-circuiting as shown in Fig. 2 (remote line loop) for testing and checking transmission troubles, implementation of such remote control of switch 20 is obvious for a person skilled in the art, and a description is therefore omitted.

The method for measuring the overall loss according to this invention will now be described with reference to the above Figures.

Being given the four-wire circuit 10, 12 connecting stations A and B, as shown in Fig. 1, it is desired to measure the overall loss of pair 10 in a direction A to B, referenced with X, and the overall loss of pair 12 in a direction B to A, referenced with Y, with $X \neq Y$ in general.

The measuring equipment shown on Fig. 2 is connected to the circuit, and with switch 20 in the position shown on Fig. 2, i. e. with the remote ends directly connected to one another, a test phonic signal at a logarithmic level $V_o$ in dB is applied to the near end A of the pair of conductors 10. On end A of the second pair of conductors 12 the logarithmic level $V_1$ of the resulting signal is measured in dB. The value of the overall loss $X + Y$ of the two pairs of conductors 10, 12 in cascade is then given by the expression

$$V_1 = V_o - X - Y,$$

or

$$X = V_o - V_1 - Y. \qquad (1)$$

After completion of the above first measure, switch 20 is changed over to its second position, in order to insert compandor 26 at end B, and the above measure is repeated, thus obtaining a signal $V_2$, which is defined by

$$V_2 = \frac{V_o - X}{n} - Y. \qquad (2)$$

By combining (1) and (2) one obtains

$$nV_2 - V_1 = -nY + Y,$$

and this leads to

$$Y = \frac{nV_2 - V_1}{1 - n} \qquad (3)$$

When Y is known, the value of X can be computed by means of (1).

The measuring method described above according to the invention is valid for any value of n. If n is chosen as 2, which is the preferred value according to the invention, equation (3) simplifies to:

$$Y = V_1 - 2V_2. \qquad (4)$$

The results of a measure of overall loss performed on a circuit as shown on Figg. 1-2 will now be given, by way of example of application of the method of measure according to the invention.

With all values expressed in dB, with n = 2, and with a value of 600 ohms chosen for each of the two impedances 16 and 24, and after further assuming $V_0$ = 0 dBm, the following measures of the resulting levels were obtained on the measuring instrument:

$V_1$ = - 23 dBm,
$V_2$ = - 18 dBm,

from which, by successively using (4) and (1), the following results are obtained:

Y = - 23 - ( - 36) dB = 13 dB,
X = 0 - ( - 23) - 13 dB = 10 dB.

Although reference has been made in this specification to a line having two pairs of conductors, it is apparent that the invention can be used with obvious modifications to four-wire circuits implemented in multiplex systems, without exceeding the scope of the invention.

## Claims

1. A method for measuring the overall loss in a four-wire circuit comprising a first pair of conductors (10) and a second pair of conductors (12), each having a near end (A) and a remote end (B), comprising the following steps:

    directly connecting the remote end of the second pair of conductors to the remote end of the first pair of conductors;

    applying a test phonic signal at a predetermined logarithmic level $V_0$ to the near end of the first pair of conductors;

    measuring the logarithmic level $V_1$ of the resulting signal at the near end of the second pair of conductors, terminated by a predetermined load (24);

    characterized in that it further comprises the following steps:

    inserting a compandor (26) with division factor n between the remote end of the first pair of conductors and the remote end of the second pair of conductors, where n can assume any value except one;

    measuring the logarithmic level $V_2$ of the resulting signal at the near end of the second pair of conductors, terminated by a predetermined load;

    and determining the overall loss X of the first pair of conductors and the overall loss Y of the second pair of conductors, in either case in the direction from the respective near end to the respective remote end, by means of the formulae:

$$Y = \frac{nV_2 - V_1}{1 - n}$$

2. The method of claim 1, characterized in that n = 2. and

$$X = V_0 - V_1 - Y.$$

3. An apparatus for carrying out the method of measuring the overall loss according to the claim 1, in a circuit comprising a first (10) and a second (12) pair of conductors, comprising:

    a generator (14) of test phonic signals adapted to be connected to a first end (A) of the first pair of conductors;

    means (18) for determining the logarithmic level of phonic signals, adapted to be connected to a

4

first end (A) of the second pair (12) of conductors;

a two-wire short-circuit connection (22) for connecting the second end of the first pair of conductors to the second end of the second pair of conductors;

a two-way double throw switch (20) having a first position and a second position, in said first position said switch connecting the second end of the first pair of conductors and the second end of the second pair of conductors through the short-circuit connection; characterized in that it further comprises:

a compandor (26) having an input (28) and an output (30), adapted to divide the logarithmic level of a phonic signal applied at its input by a predetermined division factor n, where n can assume any value except one; and in that

in said second position, said switch connecting the second end of the first pair of conductors to the input of said compandor and the second end of the second pair of conductors to the output of said compandor.

4. The apparatus of claim 3, characterized in that it further comprises a remote control for switching said switch from said first end of the first pair of conductors.

**Revendications**

1. Procédé pour mesurer la perte globale dans un circuit à quatre fils comportant une première paire de conducteurs (10) et une deuxième paire de conducteurs (12), chacune d'elles ayant une extrémité rapprochée (A) et une extrémité éloignée (B), comportant les étapes suivantes :
   - raccordement direct de l'extrémité éloignée de la deuxième paire de conducteurs avec l'extrémité éloignée de la première paire de conducteurs ;
   - application d'un signal phonique d'essai à un niveau logarithmique $V_o$ prédéterminé à l'extrémité rapprochée de la première paire de conducteurs ;
   - mesure du niveau logarithmique $V_1$ du signal résultant à l'extrémité rapprochée de la deuxième paire de conducteurs qui se termine sur une charge (24) prédéterminée ; caractérisée en ce qu'il comprend en outre les étapes suivantes :
   - insertion d'un compresseur-expanseur (26) ayant un facteur de division n entre l'extrémité éloignée de la première paire de conducteurs et l'extrémité éloignée de la deuxième paire de conducteurs, n pouvant prendre n'importe quelle valeur à l'exception de la valeur un,
   - mesure du niveau logarithmique $V_2$ du signal résultant à l'extrémité rapprochée de la deuxième paire de conducteurs qui se termine sur une charge prédéterminée ;
   - et détermination de la partie globale X de la première paire de conducteurs et de la partie globale Y de la deuxième paire de conducteurs, dans chaque cas dans la direction allant de l'extrémité rapprochée respective à l'extrémité éloignée respective au moyen de la formule

$$y = \frac{nV_2 - V_1}{1 - n}$$

2. Procédé conforme à la revendication 1, caractérisé en ce que n = 2 et

$$X = V_0 - V_1 - Y$$

3. Appareil pour la mise en oeuvre du procédé de mesure de la perte globale conforme à la revendication 1, dans un circuit comportant une première paire (10) et une deuxième paire (12) de conducteurs, appareil comportant :
   - un générateur (14) de signaux phoniques d'essai adapté pour être raccordé à une première extrémité (A) de la première paire de conducteurs ;
   - des moyens (18) pour déterminer le niveau logarithmique de signaux phoniques propres à être raccordés à la première extrémité (A) de la deuxième paire (12) de conducteurs ;

5

EP 0 253 062 B1

- une connexion (22) de court-circuit à 2 fils pour raccorder la deuxième extrémité de la première paire de conducteurs à la deuxième extrémité de la deuxième paire de conducteurs ;
- un commutateur (20) double à deux positions, c'est-à-dire ayant une première position et une deuxième position, ledit commutateur raccordant dans ladite première position la deuxième extrémité de la première paire de conducteurs avec la deuxième extrémité de la deuxième paire de conducteurs à travers la connexion de court-circuit, caractérisé en ce qu'il comprend en outre :
- un compresseur-expanseur (26) ayant une entrée (28) et une sortie (30) propre à diviser le niveau logarithmique d'un signal phonique appliqué à son entrée par un facteur diviseur n prédéterminé, n pouvant prendre n'importe quelle valeur à l'exception de la valeur un, et en ce que, dans ladite deuxième position, ledit commutateur raccorde la deuxième extrémité de la première paire de conducteurs à l'entrée dudit compresseur-expanseur et la deuxième extrémité de la deuxième paire de conducteurs à la sortie dudit compresseur-expanseur.

4. Appareil conforme à la revendication 3, caracterisé en ce que il comporte une télécommande pour commuter ledit commutateur de la première extrémité de la première paire de conducteurs.

**Patentansprüche**

1. Verfahren zur Messung der Gesamtdämpfung in Vierdrahtfernsprechleitungen, die ein erstes und ein zweites Paar von je ein nahes Ende (A) und ein fernes Ende (B) aufweisenden Leitungen (10 bzw. 12) enthalten, wobei das entfernte Ende des zweiten Paars von Leitungen direkt mit dem entfernten Ende des ersten Paars von Leitungen verbunden, ein phonisches Testsignal mit einem vorgewählten logarithmischen Pegel $V_0$ an das nahe Ende des ersten Paars von Leitungen angelegt und der logarithmische Pegel $V_1$ des resultierenden Signals am nahen Ende des zweiten Paars von durch eine vorgewählte Last (24) abgeschlossenen Leitungen gemessen wird, dadurch gekennzeichnet, daß ferner ein Kompandor (26) mit einem Teilungsfaktor $n$, wobei $n$ irgendeinen Wert mit Ausnahme von eins annehmen kann, zwischen dem entfernten Ende des ersten Paars von Leitungen und dem entfernten Ende des zweiten Paars von Leitungen eingesetzt, der logarithmische Pegel $V_2$ des resultierenden Signals am nahen Ende des zweiten Paars von durch eine vorgewählte Last (24) abgeschlossenen Leitungen gemessen und die Gesamtdämpfung X bzw. Y des ersten bzw. zweiten Paars von Leitungen, in jedem Fall in der Richtung vom zugehörigen nahen Ende zum zugehörigen fernen Ende, mittels der Formeln

$$Y = \frac{nV_2 - V_1}{1 - n}$$

2. Verfahren nach Anspruch 1, dadurch gekennzeichnet, daß

$n = 2$

und

$X = V_0 - V_1 - Y.$

3. Gerät zur Ausführung des Verfahrens zur Messung der Gesamtdämpfung nach Anspruch 1 in einem ein erstes und ein zweites Paar (10 bzw. 12) von Leitungen aufweisenden Schaltkreis, enthaltend: einen zum Anschluß an ein erstes Ende (A) des ersten Paars von Leitungen geeigneten Generators (14) für ein phonisches Testsignal, ein zum Anschluß an ein erstes Ende (A) des zweiten Paars (12) von Leitungen geeignetes Mittel (18) zur Bestimmung des logarithmischen Pegels phonischer Signale, eine Zweidrahtkurschlußverbindung (22) zum Verbinden des zweiten Endes des ersten Paars von Leitungen mit dem zweiten Ende des zweiten Paars von Leitungen und einen Zweiwegeumschalter (20) mit einer ersten Stellung und einer zweiten Stellung wobei dieser Schalter in der ersten Stellung das zweite Ende des ersten Paars von Leitungen durch die Kurzschlußverbindung mit dem zweiten Ende des zweiten Paars von Leitungen verbindet, dadurch gekennzeichnet, daß es einen Kompandor (26) mit einem Eingang (28) und einem Ausgang (30) enthält, der geeignet ist, den logarithmischen Pegel eines an seinen Eingang gelegten phonischen Signals um einen vorgewählten Teilungsfaktor $\bar{n}$ zu teilen, wobei $\bar{n}$ irgendeinen Wert mit Ausnahme von eins annehmen kann, und daß der Schalter in seiner zweiten Stellung das zweite Ende des ersten Paars von Leitungen mit dem Eingang des Kompandors und das zweite Ende des zweiten Paars von Leitungen mit dem Ausgang des Kompandors verbindet.

4. Gerät nach Anspruch 3, dadurch gekennzeichnet, dass es zusätzlich eine Fernsteuerung aufweist um den Schalter von dem ersten Ende des ersten Paars von Leitungen umzuschalten.

FIG. 1

FIG. 2

FIG. 3